# EUROPEAN PATENT SPECIFICATION

(11) **EP 3 880 002 B1**
(45) Date of publication and mention of the grant of the patent: **25.03.2026**
(21) Application number: 18804588.4
(22) Date of filing: 16.11.2018
(51) Int. Cl.: A23L 27/10

(54) **DRY ONION PREPARATION**
TROCKENE ZWIEBELZUBEREITUNG
PRÉPARATION D'OIGNON SEC

(43) Date of publication of application: 22.09.2021
(73) Proprietor: Symrise AG, 37603 Holzminden Niedersachsen (DE)
(72) Inventor: SABATER-LUENTZEL, Christopher, 37603 Holzminden (DE); KOCH, Jens, 37632 Eschershausen (DE); BLUME, Jochen, 59348 Lüdinghausen (DE); HILLE, Matthias, 36791 Boffzen (DE); KOPPE, Volkmar, 37671 Höxter-Stahle (DE); GROHMANN, Lars, 37603 Holzminden (DE); ABRAHAMSE, Salomon Leendert, 3133 AT Vlaardingen (NL); ACHARYA, Parag, 3133 AT Vlaardingen (NL); BATENBURG, Amir Maximilian, 3133 AT Vlaardingen (NL); VANDER STAPPEN, Michel, 3133 AT Vlaardingen (NL)
(74) Representative: Eisenführ Speiser
(86) International application number: PCT/EP2018/081547
(87) International publication number: WO 2020/098950

(56) References cited:
- WO-A1-2015/156380
- WO-A1-2016/175323
- J�RG RESEMANN ET AL: "Comparative study on the interrelation between flavor related parameters of different onion (Allium cepa L.) cultivars and their applicability to forecasting onion oil yield", JOURNAL OF FOOD, AGRICULTURE & ENVIRONMENT, 1 January 2003 (2003-01-01), pages 104 - 111, XP055230219, Retrieved from the Internet <URL:http://world-food.net/download/journals/2003-issue_3&4/food-20.pdf> [retrieved on 20151123]
- MANS. BOELENS ET AL: "Volatile flavor compounds from onion", JOURNAL OF AGRICULTURAL AND FOOD CHEMISTRY, vol. 19, no. 5, 1 May 1971 (1971-05-01), pages 984 - 991, XP055206161, ISSN: 0021-8561, DOI: 10.1021/jf60177a031
- TOKITOMO YUKIKO: "Flavor constituents of roasted onions of different cultivars, and comparison of their aroma patterns", JOURNAL OF THE JAPANESE SOCIETY FOR FOOD SCIENCE AND TECHNOLOGY, vol. 42, no. 12, 1995, pages 1003 - 1011, XP009514335, ISSN: 0029-0394
- CHOI SO MANG ET AL: "Volatile composition and sensory characteristics of onion powders prepared by convective drying", FOOD CHEMISTRY, ELSEVIER LTD, NL, vol. 231, 23 March 2017 (2017-03-23), pages 386 - 392, XP029992230, ISSN: 0308-8146, DOI: 10.1016/J.FOODCHEM.2017.03.129
- SINHA N K ET AL: "SUPERCRITICAL CARBON DIOXIDE EXTRACTION OF ONION FLAVORS AND THEIR ANALYSIS BY GAS CHROMATOGRAPHY-MASS SPECTROMETRY", JOURNAL OF AGRICULTURAL AND FOOD CHEMISTRY, AMERICAN CHEMICAL SOCIETY, BOOKS AND JOURNALS DIVISION, US, vol. 40, no. 5, 1 May 1992 (1992-05-01), pages 842 - 845, XP000275566, ISSN: 0021-8561, DOI: 10.1021/JF00017A027

## Description

The present invention relates to new onion flavour compositions, the use of such new onion flavour compositions to impart and/or enhance an onion flavour and preparations for nourishment or pleasure or semi-finished products for the production of a preparation for nourishment or pleasure.

Further aspects of the present invention or in connection therewith as well as preferred embodiments will be described below as well as in the attached claims.

Due to their versatile taste profile, onions *(Allium cepa)* are widely used as ingredient in many different food products. To impart or enhance an onion taste and/or smell, mostly onion flavour compositions, including an onion-based powder, juice, concentrate, oil, pomace or puree, are used. Onion powders are for example described in Choi et al., Food Chemistry, 2017, volume 231, pages 386-392.

In diverse food products, a detailed taste profile of onions, authentically imparting or enhancing a culinary taste and/or smell known from the kitchen, e.g. sautéed and/or shallow fried onions, is required. Therefore, onions are often heated to create such notes. Heating processes give rise to a complex composition of different compounds, which in part arise by autoxidation, thermal decomposition or initiation of Maillard-type compounds of some of the previously contained compounds.

Due to the complexity of the obtained compositions, the manufacture of an onion flavour composition imparting or enhancing a distinct culinary taste and/or scent profile is rather difficult. With the currently existing onion flavour compositions, several taste and/or scent profiles cannot yet be obtained in a sufficient and/or authentic intensity as desired.

It was thus the primary object of the present invention to provide new onion flavour compositions which impart and/or enhance such an authentic taste profile of sautéed onions. It was also object of the present invention to provide novel preparations for nourishment or pleasure or semi-finished products for the production of a preparation for nourishment or pleasure comprising such onion flavour compositions. Further objects of the present invention or in connection therewith become apparent when reading the specification of the present invention and its aspects and preferred embodiments as described herein.

The primary object of the present invention is achieved by an onion flavour composition, in form of a powder, comprising
a) all substances selected from group A consisting of Dimethyl trisulfide, Dimethyl tetrasulfide, Dipropyl disulfide, 2-Methyl-2-pentenal and 3,4-Dimethylthiophene;
b) none, one or more substances selected from group B consisting of Furfural, Isobutyraldehyde, 5-Methylfurfural, and Cis-Methyl-1-propenyl disulfide;
wherein the ratio of the sum of the concentrations by weight of the substances from component a), related to the total composition, and the sum of the concentrations by weight of the substances from component b), related to the total composition, or, in other words, wherein the ratio of the sum of the total weight of the substances from component a), related to the total weight of the composition, and the sum of the total weight of the substances from component b), related to the total weight of the composition, is higher than or equal to 1:1.

A ratio of higher than 1:1 is meant to be understood as e.g. a ratio of 1.5:1 or 2:1. Particularly, a ratio of higher than 1:1 is achieved if one or several of the substances of group A is/are present in rather high amounts, whereas one or several of the substances of group B is/are present in rather low amounts. This may also include the case if none of the substances of group B are present. In such a case, the ratio would be calculated as ∞, which is higher than a ratio of 1:1, 1.5:1, 2:1 or the like.

A study of Villière et al., Evaluation of aroma profile differences between sué, sautéed and pan-fried onions using an innovative olfactometric approach, Flavour, (2015) 4:24 analysed the aroma profile of different types of heated onion preparations. It is reported that sulphur compounds were largely contributing to the aroma of the onion samples, especially propyl-containing di- and tri-sulphides contributed to the flavour of cooked onions. Furthermore, aldehydes seemed to bring a fried note to onions and were detected in high amounts. Furans, particularly Furfural and 2-Acetylfuran, were also detected in high amounts and seemed to be important contributors to the characteristic odour of fried products.

It was surprisingly found, however, that in the onion flavour compositions according to the invention, the sulphur compound Cis-Methyl-1-propenyl disulphide is required to be present in lower amounts compared to the other substances contained in the onion flavour compositions. Similarly, it was surprisingly found that the aldehyde Isobutyraldehyde (2-Methylpropanal) as well as the furans furfural, which was explicitly mentioned in Villière et al., and 5-Methylfurfural are required to be present in lower amounts than the other substances contained in the onion flavour compositions, wherein Isobutyraldehyde and/or 5-Methylfurfural can also be absent.

Isobutyraldehyde, Furfural and 5-Methylfurfuralare known to be Maillard reaction products, which are usually responsible for a fried onion flavour. It was thus surprising that these substances were required in only lower amounts or not present at all in the onion flavour compositions according to the invention.

The onion flavour composition according to the invention comprises all substances of group A.

In addition or in another preferred embodiment of the present invention, the onion flavour composition according to the invention comprises maximal three substances of group B.

It was found that, in contrast to Cis-Methyl-1-propenyl disulphide, the sulphur compounds of group A as well as 2-Methyl-2-pentenal were required to be present in a high amount to impart or enhance an onion taste and/or smell, especially a sautéed and/or shallow fried taste and/or scent profile. Furthermore, it was surprisingly found that the onion taste and/or smell, particularly a sautéed and/or shallow fried taste and/or scent profile was more intense and/or authentic if the amounts of the substances in group B were present in lower amounts or if several of these substances were even not present in the onion flavour compositions.

Preferred is an onion flavour composition according to the invention, wherein the sum of the concentrations by weight of the substances from component a), related to the total composition, is at least 3.5 mg/kg, at least 4 mg/kg or at least 4.5 mg/kg.

Furthermore, it is preferred, that the sum of the concentrations by weight of the substances from component b), if present in the onion flavour composition according to the invention and related to the total composition, is maximal 5 mg/kg, preferably maximal 4 mg/kg, maximal 3 mg/kg, maximal 2 mg/kg.

Onion flavour compositions usually comprise a complex composition with a high number of included substances, as during heating processes applied to onions, a variety of different substances arises. Therefore, a sum of the concentrations by weight of at least 3.5 mg/kg, at least 4 mg/kg or at least 4.5 mg/kg can already cause significant effects on the complex taste and/or scent profile, as already in these ranges the substances of group A are though present in higher amounts as many of the high number of other substances. Likewise, it is advantageous if the sum of the concentrations by weight of the substances of group B is rather low to reduce or prevent an effect on the taste and/or scent profile. Therefore, a concentration by weight of maximal 5 mg/kg, preferably maximal 4 mg/kg, maximal 3 mg/kg, maximal 2 mg/kg.

Preferred is an onion flavour composition according to the invention, wherein the ratio of the sum of the concentrations by weight of the substances from component a), related to the total composition, and the sum of the concentrations by weight of the substances from component b), related to the total composition, is at least 1.5 : 1, preferably at least 2 : 1, at least 2.5 : 1, at least 3 : 1, at least 3.5 : 1.

It was found that the onion taste and/or smell, particularly a sautéed and/or shallow fried taste and/or scent profile was more intense and/or authentic if high amounts of the substances of group A and simultaneously low amounts of the substances of group B were present in the flavour compositions. Higher ratios of the amount of the group A substances and the amount of the group B substances are thus advantageous for the desired taste and/or scent profile.

The substances of component a) in the onion flavour composition according to the invention comprise Dimethyl trisulfide, 3,4-Dimethylthiophene and 2-Methyl-2-pentenal.

Unlike the sulfur compound Cis-Methyl-1-propenyl disulphide, especially Dimethyl trisulfide, 3,4-Dimethylthiophene as well as 2-Methyl-2-pentenal were required to be present in a high amount to impart or enhance an onion taste and/or smell, especially a sautéed and/or shallow fried taste and/or scent profile.

In addition or in a further embodiment of the present invention, the onion flavour composition preferably comprises Furfural and Cis-Methyl-1-propenyl disulfide.

Preferably, the concentrations by weight of 5-Methylfurfural and/or Isobutyraldehyde, if present in the onion flavour composition according to the invention and related to the total composition, is lower than 2 mg/kg, preferably lower than 1.5 mg/kg or lower than 1.0 mg/kg. Preferably, 5-Methylfurfural and/or Isobutyraldehyde are not present in the onion flavour composition.

In a preferred embodiment, the substances of group B are selected from Furfural and Cis-Methyl-1-propenyl disulfide.

An onion flavour composition according to the present invention can be - and preferably is
- prepared by or producible a method comprising or consisting of the following steps:
   i) providing fresh onion,
   ii) providing onion juice concentrate having a Brix degree of 65 to 95, preferably a Brix degree of 70 to 90, particularly preferably a Brix degree of 75 to 85,
   iii) drying 100 parts by weight of the fresh onion and 50 to 85 parts by weight, preferably 55 to 80 parts by weight, particularly preferably 60 to 75 parts by weight of the onion juice concentrate,
      wherein the fresh onion and the onion juice concentrate are mixed, preferably before drying, to obtain an onion mix,
      wherein the drying step is performed to reduce the water content to 5 wt.-% or less, preferably 4 wt.-% or less, particularly preferably 3 wt.-% or less, based on the total weight of the onion mix or, where applicable, the respective component,
   iv) providing onion pomace,
   v) optionally: drying the onion pomace, preferred as described herein below,
   vi) mixing 75 to 100 parts by weight, preferably 80 to 100 parts by weight, particularly preferably 85 to 95 parts by weight of the dried onion mix obtained in step iii) with 5 to 20 parts by weight, preferably 7.5 to 15 parts by weight, particularly preferably 8 to 12 parts by weight of the onion pomace provided in step iv) or obtained in step v) and milling the mixture to obtain the onion flavour composition.

The present invention thus also provides novel methods for producing novel, particularly advantageous onion flavour compositions.

Preferably, the term "onion" as used herein, unless indicated otherwise, refers to onion bulb.

Preferably, the term "fresh onion" as used herein refers to non-dehydrated whole onion or to non-dehydrated pieces of onion.

Preferably, the term "dehydrated onion" as used herein refers to the material obtained after dehydrating fresh onion, especially after dehydrating chopped or pureed fresh onion.

Preferably, the term "onion juice" as used herein refers to the liquid that is obtained by pressing onions.

Preferably, the term "onion juice concentrate" as used herein refers to onion juice from which at least a part of the water has been removed, e.g. by evaporation or reverse osmosis.

Preferably, the term "onion pomace" as used herein refers to the solid residue that remains after pressing onions for juice.

The Brix degree relates to the density of e.g. the onion juice concentrate, wherein the density corresponds to the density of a solution of saccharose in water which contains as many grams of saccharose per 100 g solution, as is the indication of Brix degree. An onion juice concentrate has for example 1 Brix degree if it has the same density as a solution of 1 g saccharose in 100 g saccharose/water solution. 10 Brix thus correspond to a density of 10 g saccharose in 100 g saccharose/water solution.

In a preferred embodiment of the above described method for producing an onion flavour composition according to the invention, the onion mix is dried in step iii) by means of a vacuum belt or tray dryer, a drum dryer or a spray dryer.

Preferably, the drying process in step iii) is performed at a temperature of 120 °C or more, preferably 125 °C or more, for 25 minutes or more, preferably for 30 min or more.

Preferably, the water contents are measured by Karl Fischer Titration.

The onion pomace is obtained after pressing onions. Typically and preferably, the onion pomace has a water content of 60 wt.-% or higher, particularly preferably a water content of 65 to 80 wt.-%, especially preferably of 70 to 75 wt.-%.

The drying process applied to the onion pomace is preferably performed by hot air drying. The onion pomace is preferably dried until a water content of 5 wt.-% or less, preferably 4 wt.-% or less, particularly preferably 3 wt.-% or less is achieved. The drying is preferably performed at a temperature of 120 °C or more, preferably 130 °C and for at least 200 min.

The drying process effects a stabilization of the onion pomace. Reducing the water content prevents or reduces the degradation of its contents. Due to the drying process, the dried onion pomace can be stored and a further processing step directly after obtaining the onion pomace is no longer compulsory.

In connection with the above described method for producing an onion flavour composition according to the invention, the drying process in step iii) is performed at a reduced pressure of not more than 10 mbar.

In an embodiment of the above described method for producing an onion flavour composition according to the invention, roasted onion juice concentrate is provided by heating fresh onion and onion juice concentrate having a Brix degree of 60 to 85, preferably a Brix degree of 65 to 80, particularly preferably a Brix degree of 70 to 75, either separately or as a mixture. The heating step is preferably performed at 110 to 120 °C for 270 to 330 min. Preferably and in this regard, the weight ratio of fresh onion and the onion juice concentrate is in a range of from 1:1.5 to 1: 5, preferably of from 1:2 to 1:4, particularly preferably of from 1:2.5 to 1:3.5. In step iii), the roasted onion juice concentrate is further added by 25 to 45 parts by weight, preferably 30 to 40 parts by weight to produce the onion mix.

In one embodiment, one or all of fresh onions, onion juice concentrate and, where applicable, roasted onion juice concentrate is dried separately (preferably under the same conditions) from the other components in step iii) and added afterwards. It is however preferred that the fresh onions, the roasted onion juice concentrate and the onion juice concentrate are dried together, as described above. Hereby, the roasted onion juice concentrate can be mixed first with the onion juice concentrate and subsequently with the fresh onion or vice versa. Furthermore, the roasted onion juice concentrate can also be added as last or all components are mixed simultaneously in step iii). In another embodiment, the roasted onion juice concentrate and the onion juice concentrate can be dried separately from the fresh onions provided in step i).

It is further preferred that the milling process in step vi) is performed by means of an impact mill. Preferably, after milling the average particle size is below 0.4 mm.

Another aspect of the present invention is directed to the use of an onion flavour composition according to the invention to impart and/or enhance an onion flavour, of the type sautéed onion, in a preparation for nourishment or pleasure, or in a semi-finished product for the production of a preparation for nourishment or pleasure.

Preparations for nourishment or pleasure can be - but are not limited to - spreads, dressings, seasonings, bouillons, soups, sauces, frozen foods, confectionery, ice cream, side dishes, beverages (including drinks, tea) and food supplements that are ingested and assimilated to produce energy, stimulate growth and/or maintain life, and the manufacture of any of the foregoing.

Preparations for nourishment or pleasure can further include pet food or chewing gums.

Semi-finished products for the production of a preparation for nourishment or pleasure can be - but are not limited to - snack seasonings, for example selected from the group consisting of snack seasonings applied to potato crisps, to extruded snacks for direct consumption (e.g. corn curls), to tortilla crisps, to nuts and/or to coated nuts.

A preparation for nourishment or pleasure or a semi-finished product for the production of a preparation for nourishment or pleasure does not necessarily need to be in particular form, but can also be in liquid form.

A further aspect of the present invention relates to a preparation for nourishment or pleasure, or semi-finished product for the production of a preparation for nourishment or pleasure, wherein the preparation or the semi-finished product comprises an onion flavour composition, in form of a powder, according to the invention, preferably wherein the total amount of the onion flavour composition and/or of the contained substances of groups A and B are sufficient to impart and/or enhance an onion flavour, preferably of the type sautéed onion and/or of the type shallow fried onion.

The present invention, preferred embodiments thereof and several aspects in connection therewith will be described below in the form of selected examples.

### Examples:

### Example 1: Onion flavour composition, type: sautéed:

100 g of fresh onion are cut by a slicer. 87.5 g of onion juice concentrate (80 ° Brix) is provided.

The fresh onion and the onion juice concentrate are mixed to obtain the onion mix and are further dried by vacuum belt drying for 30 min at 140 °C and a pressure of 8 mbar.

38 g of onion pomace is provided. The onion pomace is dried by hot air drying for 200 min at 130 °C.

90 g of the dried onion mix and 10 g of the dried onion pomace are mixed and milled by an impact mill to obtain the onion flavour composition.

The obtained onion flavour composition was analysed by means of a GC-MS and comprises the following ingredients:

| **Substance** | **Concentrations by weight [mg/kg]** |
|---|---|
| Dimethyl tetrasulfide | 0.44 |
| Dimethyl trisulfide | 0.94 |
| 2-Methyl-2-pentenal | 0.59 |
| 3,4-Dimethyl-thiophene | 2.50 |
| Dipropyl disulfide | 0.41 |
| Furfural | 0.06 |
| Cis-Methyl-1-propenyldisulfid, | 0.47 |

### Example 2: Onion flavour composition, type: shallow fried: (reference example)

For the roasted onion juice concentrate, 9 g of fresh onion is cut by a slicer, 26 g of onion juice concentrate (70 ° Brix) is provided. The components are mixed and heated for 300 min at 115 °C to obtain 35 g of the roasted onion juice concentrate.

100 g of fresh onion is cut by a slicer, 62.5 g of onion juice concentrate (80 ° Brix) is provided. The onion juice concentrate is added to 35 g of the roasted onion juice concentrate. Subsequently the fresh onion is also added to obtain the onion mix.

The onion mix and is further dried by vacuum belt drying for 30 min at 140 °C and a pressure of 8 mbar.
38 g of onion pomace is provided. The onion pomace is dried by hot air drying for 200 min at 130 °C and 10 g of dried onion pomace is obtained.
90 g of the dried onion mix and 10 g of the dried onion pomace are mixed and milled by an impact mill to obtain the onion flavour composition.

The obtained onion flavour composition was analysed by means of a GC-MS and comprises the following ingredients:

| **Substance** | **Concentrations by weight [mg/kg]** |
|---|---|
| Dimethyl trisulfide | 0.76 |
| 2-Methyl-2-pentenal | 0.72 |
| 3,4-Dimethyl-thiophene | 4.48 |
| Dipropyl disulfide | 0.36 |
| Furfural | 0.53 |
| Cis-Methyl-1-propenyldisulfid, | 0.46 |
| 5-Methylfurfural | 0.81 |

### Example 3: Application examples

### Example 3.1: Onion cream soup (wet)

| **Ingredient** | **Amount [wt.-%]** |
|---|---|
| Starch coflo 67 | 0.3 |
| Salt | 0.85 |
| Stabilizer Hamulsion^{®} DFA | 0.4 |
| Butter | 2 |
| Sunflower oil | 0.7 |
| Potato cubes | 10 |
| Onion cubes | 8 |
| Onion flavour composition, Example 2 | 4 |
| Cheese Processed Type 45 % fat | 1.2 |
| Water | 72.55 |
| Sum | 100 |

Premix all powders, melt the butter in the eater and add the vegetable oil, add powder and homogenize all with a mixer, add cheese and homogenize again, heat the mix up to 98°C add onion and potato cubes and boil the mix for 15 min.

### Example 3.2: BBQ seasoning dry

| **Ingredient** | **Amount [wt.-%]** |
|---|---|
| Sunflower oil | 10 |
| Salt | 12.1 |
| Sugar brown | 14 |
| Sugar fine | 13.8 |
| Starch coflo 67 | 5.5 |
| Onion flavour composition, Example 2 | 3.4 |
| Garlic powder | 10.6 |
| Tomato powder | 10 |
| Yest extract Gistex XII | 9 |
| Caramel sugar syrup | 5.5 |
| Citric Acid powder | 1 |
| Vinegar powder | 2.3 |
| Maltodextrin DE 18-20 | 2.8 |
| Sum | 100 |

All ingredients are mixed and used in an amount of 3-6 wt.-% on the application.

### Example 3.3: Onion cream soup (instant)

| **Ingredient** | **Amount [wt.-%]** |
|---|---|
| Instant starch Prejel 70 VA | 20 |
| Fat powder satro FP78 | 35 |
| Maltodextrin DE 18-20 | 27.8 |
| Stabilizer Hamulsion^{®} | 2 |
| skimmed milk powder | 2 |
| Onion flavour composition, Example 1 | 2 |
| Onion flavour composition, Example 2 | 4 |
| Salt | 5 |
| MSG | 2 |
| Caramel sugar syrup powder | 0.2 |
| Sum | 100 |

All ingredients are mixed homogeneously. 140 g are used for 1 l water and boiled for 1 min.

## Claims

1. Onion flavour composition, in form of a powder, comprising
a) all substances selected from group A consisting of Dimethyl trisulfide, Dimethyl tetrasulfide, Dipropyl disulfide, 2-Methyl-2-pentenal and 3,4-Dimethylthiophene;
b) none, one or more substances selected from group B consisting of Furfural, Isobutyraldehyde, 5-Methylfurfural, and Cis-Methyl-1-propenyl disulfide;
wherein the ratio of the sum of the concentrations by weight of the substances from component a), related to the total composition, and the sum of the concentrations by weight of the substances from component b), related to the total composition, is higher than or equal to 1:1.

2. Onion flavour composition according to claim 1, wherein the composition comprises maximal three substances of group B.

3. Onion flavour composition according to any of the preceding claims, wherein the sum of the concentrations by weight of the substances from component a), related to the total composition, is at least 3.5 mg/kg, at least 4 mg/kg or at least 4.5 mg/kg.

4. Onion flavour composition according to any of the preceding claims, wherein the sum of the concentrations by weight of the substances from component b), if present, related to the total composition, is maximal 5 mg/kg, preferably maximal 4 mg/kg, maximal 3 mg/kg, maximal 2 mg/kg.

5. Onion flavour composition according to any of the preceding claims, wherein the ratio of the sum of the concentrations by weight of the substances from component a), related to the total composition, and the sum of the concentrations by weight of the substances from component b), related to the total composition, is at least 1.5 : 1, preferably at least 2 : 1, at least 2.5 : 1, at least 3 : 1, at least 3.5 : 1.

6. Onion flavour composition according to any of the preceding claims, wherein the substances of component a) comprise at least Dimethyl trisulfide, 3,4-Dimethylthiophene and 2-Methyl-2-pentenal.

7. Onion flavour composition according to any of the preceding claims, wherein the substances of component b) comprise Furfural and Cis-Methyl-1-propenyl disulfide.

8. Onion flavour composition according to any of the preceding claims, wherein the concentrations by weight of 5-Methylfurfural and/or Isobutyraldehyde, related to the total composition, is lower than 2 mg/kg, preferably lower than 1.5 mg/kg or lower than 1.0 mg/kg.

9. Onion flavour composition according to any of the preceding claims prepared or producible by a method comprising the steps
i) providing fresh onion,
ii) providing onion juice concentrate having a Brix degree of 65 to 95, preferably a Brix degree of 70 to 90, particularly preferably a Brix degree of 75 to 85,
iii) drying 100 parts by weight of the fresh and 50 to 85 parts by weight, preferably 55 to 80 parts by weight, particularly preferably 60 to 75 parts by weight of the onion juice concentrate,
wherein the fresh onion and the onion juice concentrate are mixed, preferably before drying, to obtain an onion mix,
wherein the drying step is performed to reduce the water content to 5 wt.-% or less, preferably 4 wt.-% or less, particularly preferably 3 wt.-% or less, based on the total weight of the onion mix or, where applicable, the respective components,
iv) providing onion pomace,
v) optionally: drying the onion pomace,
vi) mixing 75 to 100 parts by weight, preferably 80 to 100 parts by weight, particularly preferably 85 to 95 parts by weight of the onion mix obtained in step iii) with 5 to 20 parts by weight, preferably 7.5 to 15 parts by weight, particularly preferably 8 to 12 parts by weight of the onion pomace provided in step iv) or obtained in step v) and milling the mixture to obtain the onion flavour composition.

10. Onion flavour composition according to claim 9, wherein a roasted onion juice concentrate is provided by heating fresh onion and onion juice concentrate having a Brix degree of 60 to 85, preferably a Brix degree of 65 to 80, particularly preferably a Brix degree of 70 to 75, either separately or as a mixture,
preferably wherein the ratio of the heated onion and the onion juice concentrate, both used for providing the roasted onion juice concentrate, is in a range of from 1:7.5 to 1:15, preferably of from 1:8 to 1:12.5, particularly preferably of from 1:9 to 1:11,
wherein the heating step is preferably performed at 110 to 120 °C for 270 to 330 min,
and wherein in step iii), 25 to 45 parts by weight, preferably 30 to 40 parts by weight of the roasted onion juice concentrate are also added to produce the onion mix or heated separately, preferably under the same conditions, and added afterwards.

11. Onion flavour composition according to claims 9 or 10, wherein the drying of the mixture in step iii) is performed in a dryer, preferably a vacuum belt or tray dryer, a drum dryer or a spray dryer.

12. Use of an onion flavour composition according to any of the preceding claims to impart and/or enhance an onion flavour of the type sautéed onion in a preparation for nourishment or pleasure, or in a semi-finished product for the production of a preparation for nourishment or pleasure.

13. Preparation for nourishment or pleasure, or semi-finished product for the production of a preparation for nourishment or pleasure, wherein the preparation or the semi-finished product comprises an onion flavour composition, in form of a powder, according to any of the claims 1 to 11.

## Patentansprüche

1. Zwiebel-Geschmacksstoffzusammensetzung in Form eines Pulvers, umfassend
a) alle Substanzen ausgewählt aus der Gruppe A bestehend aus Dimethyltrisulfid, Dimethyltetrasulfid, Dipropyldisulfid, 2-Methyl-2-pentenal und 3,4-Dimethylthiophen;
b) keine, eine oder mehrere Substanzen ausgewählt aus der Gruppe B bestehend aus Furfural, Isobutyraldehyd, 5-Methylfurfural und Cis-Methyl-1-propenyldisulfid;
wobei das Verhältnis der Summe der Gewichtskonzentrationen der Substanzen des Bestandteils a), bezogen auf die gesamte Zusammensetzung, und die Summe der Gewichtskonzentrationen der Substanzen des Bestandteils b), bezogen auf die gesamte Zusammensetzung, größer oder gleich 1:1 ist.

2. Zwiebel-Geschmacksstoffzusammensetzung gemäß Anspruch 1, wobei die Zusammensetzung maximal drei Substanzen der Gruppe B umfasst.

3. Zwiebel-Geschmacksstoffzusammensetzung gemäß einem der vorangehenden Ansprüche, wobei die Summe der Gewichtskonzentrationen der Substanzen des Bestandteils a), bezogen auf die gesamte Zusammensetzung, mindestens 3,5 mg/kg, mindestens 4 mg/kg oder mindestens 4,5 mg/kg ist.

4. Zwiebel-Geschmacksstoffzusammensetzung gemäß einem der vorangehenden Ansprüche, wobei die Summe der Gewichtskonzentrationen der Substanzen des Bestandteils b), sofern vorhanden, bezogen auf die gesamte Zusammensetzung, maximal 5 mg/kg, vorzugsweise maximal 4 mg/kg, maximal 3 mg/kg, maximal 2 mg/kg ist.

5. Zwiebel-Geschmacksstoffzusammensetzung gemäß einem der vorangehenden Ansprüche, wobei das Verhältnis der Summe der Gewichtskonzentrationen der Substanzen des Bestandteils a), bezogen auf die gesamte Zusammensetzung, und die Summe der Gewichtskonzentrationen der Substanzen des Bestandteils b), bezogen auf die gesamte Zusammensetzung, mindestens 1,5 : 1, vorzugsweise mindestens 2 : 1, mindestens 2,5 : 1, mindestens 3 : 1, mindestens 3,5 : 1 ist.

6. Zwiebel-Geschmacksstoffzusammensetzung gemäß einem der vorangehenden Ansprüche, wobei die Substanzen des Bestandteils a) mindestens Dimethyltrisulfid, 3,4-Dimethylthiophen und 2-Methyl-2-pentenal umfassen.

7. Zwiebel-Geschmacksstoffzusammensetzung gemäß einem der vorangehenden Ansprüche, wobei die Substanzen des Bestandteils b) Furfural und Cis-Methyl-1-propenyldisulfid umfassen.

8. Zwiebel-Geschmacksstoffzusammensetzung gemäß einem der vorangehenden Ansprüche, wobei die Gewichtskonzentrationen von 5-Methylfurfural und/oder Isobutyraldehyd, bezogen auf die gesamte Zusammensetzung, niedriger als 2 mg/kg, vorzugsweise niedriger als 1,5 mg/kg oder niedriger als 1,0 mg/kg sind.

9. Zwiebel-Geschmacksstoffzusammensetzung gemäß einem der vorangehenden Ansprüche, hergestellt oder herstellbar durch ein Verfahren umfassend die Schritte
i) Bereitstellen von frischer Zwiebel,
ii) Bereitstellen von Zwiebelsaftkonzentrat, das ein Brix-Grad von 65 bis 95, vorzugsweise ein Brix-Grad von 70 bis 90, besonders bevorzugt ein Brix-Grad von 75 bis 85 aufweist,
iii) Trocknen von 100 Gewichtsanteilen der frischen Zwiebel und 50 bis 85 Gewichtsanteilen, vorzugsweise 55 bis 80 Gewichtsanteilen, besonders bevorzugt 60 bis 75 Gewichtsanteilen des Zwiebelsaftkonzentrats,
wobei die frische Zwiebel und das Zwiebelsaftkonzentrat gemischt werden, vorzugsweise vor dem Trocknen, um eine Zwiebelmischung zu erhalten,
wobei der Trocknungsschritt durchgeführt wird, um den Wassergehalt auf 5 Gew.-% oder niedriger, vorzugsweise 4 Gew.-% oder niedriger, besonders bevorzugt 3 Gew.-% oder niedriger, bezogen auf das Gesamtgewicht der Zwiebelmischung oder, soweit anwendbar, die entsprechenden Bestandteile, zu reduzieren,
iv) Bereitstellen von Zwiebeltrester,
v) optional: Trocknen des Zwiebeltresters,
vi) Mischen von 75 bis 100 Gewichtsanteilen, vorzugsweise 80 bis 100 Gewichtsanteilen, besonders bevorzugt 85 bis 95 Gewichtsanteilen der Zwiebeimischung erhalten in Schritt iii) mit 5 bis 20 Gewichtsanteilen, vorzugsweise 7,5 bis 15 Gewichtsanteilen, besonders vorzugsweise 8 bis 12 Gewichtsanteilen des Zwiebeltresters wie in Schritt iv) bereitgestellt oder wie in Schritt v) erhalten, und Mahlen der Mischung, um die Zwiebel-Geschmacksstoffzusammensetzung zu erhalten.

10. Zwiebel-Geschmacksstoffzusammensetzung gemäß Anspruch 9, wobei ein geröstetes Zwiebelsaftkonzentrat bereitgestellt wird durch Erhitzen von frischer Zwiebel und Zwiebelsaftkonzentrat mit einem Brix-Grad von 60 bis 85, vorzugsweise einem Brix-Grad von 65 bis 80, besonders bevorzugt ein Brix-Grad von 70 bis 75, entweder getrennt oder als Mischung,
vorzugsweise wobei das Verhältnis der erhitzten Zwiebel und dem Zwiebelsaftkonzentrat, beide verwendet, um das geröstete Zwiebelsaftkonzentrat bereitzustellen, in einem Bereich von 1 : 7,5 bis 1 : 15, vorzugsweise von 1 : 8 bis 1 : 12,5, besonders bevorzugt von 1 : 9 bis 1 : 11 liegt,
wobei der Erhitzungsschritt vorzugsweise bei 110 bis 120 °C für 270 bis 330 Minuten durchgeführt wird,
und wobei in Schritt iii) 25 bis 45 Gewichtsanteile, vorzugsweise 30 bis 40 Gewichtsanteile des gerösteten Zwiebelsaftkonzentrats ebenfalls hinzugegeben werden, um die Zwiebelmischung herzustellen, oder getrennt erhitzt werden, vorzugsweise unter denselben Bedingungen, und später hinzugegeben werden.

11. Zwiebel-Geschmacksstoffzusammensetzung gemäß Anspruch 9 oder 10, wobei das Trocknen der Mischung in Schritt iii) in einem Trockner, vorzugsweise einem Vakuum-Bandtrockner oder einem Tabletttrockner, einem Trommeltrockner oder einem Sprühtrockner durchgeführt wird.

12. Verwendung einer Zwiebel-Geschmacksstoffzusammensetzung gemäß einem der vorangehenden Ansprüche, um einen Zwiebelgeschmack des Typs gebratene Zwiebel in einer Nahrungs- oder Genussmittelzubereitung oder einem Halbfertigprodukt zur Herstellung einer Nahrungs- oder Genussmittelzubereitung hervorzurufen und/oder zu verstärken.

13. Nahrungs- oder Genussmittelzubereitung oder Halbfertigprodukt zur Herstellung einer Nahrungs- oder Genussmittelzubereitung, wobei die Zubereitung oder das Halbfertigprodukt eine Zwiebel-Geschmacksstoffzusammensetzung in Form eines Pulvers gemäß einem der Ansprüche 1 bis 11 umfasst.

## Revendications

1. Composition aromatisante à l'oignon, sous forme d'une poudre, comprenant
a) toutes les substances choisies dans le groupe A constitué par le trisulfure de diméthyle, le tétrasulfure de diméthyle, le disulfure de dipropyle, le 2-méthyl-2-penténal et le 3,4-diméthylthiophène;
b) aucune, une ou plusieurs substances choisies dans le groupe B constitué par le furfural, l'isobutyraldéhyde, le 5-méthylfurfural et le disulfure de cis-méthyl-1-propényle;
dans laquelle le rapport de la somme des concentrations en poids des substances du composant a), par rapport à la composition totale, et la somme des concentrations en poids des substances du composant b), par rapport à la composition totale, est supérieur ou égal à 1 : 1.

2. Composition aromatisante à l'oignon selon la revendication 1, dans laquelle la composition comprend au maximum trois substances du groupe B.

3. Composition aromatisante à l'oignon selon l'une quelconque des revendications précédentes, dans laquelle la somme des concentrations en poids des substances du composant a), par rapport à la composition totale, est d'au moins 3,5 mg/kg, d'au moins 4 mg/kg ou d'au moins 4,5 mg/kg.

4. Composition aromatisante à l'oignon selon l'une quelconque des revendications précédentes, dans laquelle la somme des concentrations en poids des substances du composant b), s'il est présent, par rapport à la composition totale, est de 5 mg/kg au maximum, de préférence de 4 mg/kg au maximum, de 3 mg/kg au maximum, de 2 mg/kg au maximum.

5. Composition aromatisante à l'oignon selon l'une quelconque des revendications précédentes, dans laquelle le rapport de la somme des concentrations en poids des substances du composant a), par rapport à la composition totale, et la somme des concentrations en poids des substances du composant b), par rapport à la composition totale, est d'au moins 1,5 : 1, de préférence d'au moins 2 : 1, d'au moins 2,5 : 1, d'au moins 3 : 1, d'au moins 3,5 : 1.

6. Composition aromatisante à l'oignon selon l'une quelconque des revendications précédentes, dans laquelle les substances du composant a) comprennent au moins du trisulfure de diméthyle, du 3,4-diméthylthiophène et du 2-méthyl-2-penténal.

7. Composition aromatisante à l'oignon selon l'une quelconque des revendications précédentes, dans laquelle les substances du composant b) comprennent du furfural et du disulfure de cis-méthyl-1-propényle.

8. Composition aromatisante à l'oignon selon l'une quelconque des revendications précédentes, dans laquelle les concentrations en poids de 5-méthylfurfural et/ou d'isobutyraldéhyde, par rapport à la composition totale, sont inférieures à 2 mg/kg, de préférence inférieures à 1,5 mg/kg ou inférieures à 1,0 mg/kg.

9. Composition aromatisante à l'oignon selon l'une quelconque des revendications précédentes, préparée ou apte à être produite par un procédé comprenant les étapes consistant à
i) fournir de l'oignon frais,
ii) fournir du concentré de jus d'oignon ayant un degré Brix compris entre 65 et 95, de préférence un degré Brix compris compris entre 70 et 90, de manière particulièrement préférée un degré Brix compris entre 75 et 85,
iii) sécher 100 parties en poids de l'oignon frais et de 50 à 85 parties en poids, de préférence de 55 à 80 parties en poids, de manière particulièrement préférée de 60 à 75 parties en poids du concentré de jus d'oignon,
dans lequel l'oignon frais et le concentré de jus d'oignon sont mélangés, de préférence avant le séchage, afin d'obtenir un mélange d'oignon;
dans lequel l'étape de séchage est réalisée afin de réduire la teneur en eau à 5 % en poids ou moins, de préférence à 4 % en poids ou moins, de manière particulièrement préférée à 3 % en poids ou moins, par rapport au poids total du mélange d'oignon ou, si applicable, des composants respectifs,
iv) fournir du marc d'oignon,
v) en option: sécher le marc d'oignon,
vi) mélanger 75 à 100 parties en poids, de préférence 80 à 100 parties en poids, de manière particulièrement préférée 85 à 95 parties en poids du mélange d'oignon obtenu à l'étape iii), avec 5 à 20 parties en poids, de préférence 7,5 à 15 parties en poids, de manière particulièrement préférée 8 à 12 parties en poids du marc d'oignon fourni à l'étape iv) ou obtenu à l'étape v) et broyer le mélange pour obtenir la composition aromatisante à l'oignon.

10. Composition aromatisante à l'oignon selon la revendication 9, dans laquelle un concentré de jus d'oignon rôti est fourni par chauffage d'oignon frais et de concentré de jus d'oignon ayant un degré Brix compris entre 60 et 85, de préférence un degré Brix compris entre 65 et 80, de manière particulièrement préférée un degré Brix compris entre 70 et 75, soit séparément soit en tant que mélange,
de préférence, dans laquelle le rapport de l'oignon chauffé et le concentré de jus d'oignon, utilisés tout les deux pour fournir le concentré de jus d'oignon rôti, se situe dans une plage allant de 1 : 7,5 à 1 : 15, de préférence de 1 : 8 à 1 : 12,5, de manière particulièrement préférée de 1 : 9 à 1 : **11,**
dans laquelle l'étape de chauffage est de préférence réalisée à une température de **110** à 120 °C pendant 270 à 330 minutes,
et dans laquelle à l'étape iii), 25 à 45 parties en poids, de préférence 30 à 40 parties en poids, du concentré de jus d'oignon rôti sont également ajoutées pour produire le mélange d'oignon ou sont chauffées séparément, de préférence dans les mêmes conditions, et sont ajoutées ultérieurement.

11. Composition aromatisante à l'oignon selon les revendications 9 ou 10, dans laquelle le séchage du mélange à l'étape iii) est effectué dans un séchoir, de préférence un séchoir à bande sous vide ou un séchoir à plateaux, un séchoir à tambour ou un séchoir par atomisation.

12. Utilisation d'une composition aromatisante à l'oignon selon l'une quelconque des revendications précédentes pour conférer et/ou intensifier un arôme d'oignon de type oignon sauté dans une préparation alimentaire ou de plaisir, ou dans un produit semi-fini destiné à la fabrication d'une préparation alimentaire ou de plaisir.

13. Préparation alimentaire ou de plaisir ou produit semi-fini destiné à la fabrication d'une préparation alimentaire ou de plaisir, dans laquelle la préparation ou le produit semi-fini comprend une composition aromatisante à l'oignon, sous forme d'une poudre, selon l'une quelconque des revendications 1 à 11.
